# EUROPEAN PATENT APPLICATION

(11) **EP 4 497 761 A1**
(43) Date of publication of application: **29.01.2025**
(21) Application number: 24190720.3
(22) Date of filing: 24.07.2024
(51) Int. Cl.: C08B 13/00, C08L 1/32

(54) **METHOD OF PRODUCING HYDROXYPROPYL METHYLCELLULOSE ACETATE SUCCINATE POWDER**

(30) Priority: 26.07.2023 JP 2023121209
(71) Applicant: Shin-Etsu Chemical Co., Ltd., Chiyoda-ku, Tokyo 1000005 (JP)
(72) Inventor: MURAYAMA, Tomotaka, NIIGATA, 9428601 (JP); KITAGUCHI, Taishi, NIIGATA, 9428601 (JP); KITAMURA, Akira, NIIGATA, 9428601 (JP); TOHARA, Itsuki, NIIGATA, 9428601 (JP)
(74) Representative: Cabinet Nony

(57) **Abstract**

Provided is a method of producing an esterified cellulose ether having improved flowability of the powder, where the method can reduce production of fine powder in the precipitated esterified cellulose ether.

The method is a method of producing hydroxypropyl methylcellulose acetate succinate powder which essentially includes an esterification reaction step, a precipitation step, a washing/recovering step and a drying step, wherein the precipitation step is a step of extruding the reaction solution, prepared in the esterification reaction step, into water from extruding ports of an extruder to form a precipitate, and then mincing the resultant precipitate to obtain a suspension containing hydroxypropyl methylcellulose acetate succinate particles.

## Description

### BACKGROUND OF THE INVENTION

### Field of the Invention

The invention relates to a method of producing hydroxypropyl methylcellulose acetate succinate powder.

### Background art

Hydroxypropyl methylcellulose acetate succinate (hereinafter also referred to as "HPMCAS") is produced by chemically modifying a cellulose ether and is an esterified cellulose ether synthesized by replacing certain hydrogen atoms within the hydroxyl groups of cellulose with four types, in total, of substituents which are a methyl group (-CH₃), a hydroxypropyl group (-CH₂CH(OH)CH₃), an acetyl group (-COCH₃) and a succinyl group (-COCH₂CH₂COOH).

HPMCAS is used as an enteric polymeric base material in a coating application, or as a solid dispersion for concurrent use with a poorly water-soluble drug, and thus widely used particularly in the pharmaceutical field.

An esterified cellulose ether as typified by HPMCAS can be produced in a known manner. In a known method of producing esterified cellulose, a reaction solution containing an esterified cellulose ether is allowed to be in contact with water to precipitate the esterified cellulose ether, and then the impurities are washed out or removed therefrom. Reported examples of such method for allowing the reaction solution, containing an esterified cellulose ether, in contact with water include a method (Patent document 1) in which the reaction solution, containing the esterified cellulose ether, and water are combined with each other into a combined fluid channel, and the combined mixture is rotated for stirring the same along the peripheral wall at a diameter constricted portion in the combined fluid channel to thereby subject the mixture to shear; and a method (Patent document 2) of subjecting a mixture of water and a reaction solution containing an esterified cellulose ether to shear at the shear rate of at least 800 s⁻¹.

### [Prior art documents]

### [Patent documents]

[Patent document 1] JP-A-H05-339382
[Patent document 2] JP-A-2015-512456

### SUMMARY OF THE INVENTION

The methods described in Patent documents 1 and 2 use precipitated esterified cellulose ethers that contain large amounts of fine powder, which causes occlusion in the filtering surface when the impurities are washed via filtration, and leads to a slowdown in the speed of washing. Further, the final product obtained thereby exhibits poor flowability, and has a problem of being inferior in terms of handleability as a powder.

The present invention has been made in view of these circumstances, and it is an object of the present invention to provide a method of producing an esterified cellulose ether powder having improved flowability of the powder, where the method can reduce production of fine powder in the precipitated esterified cellulose ether.

The inventors of the present invention diligently conducted a series of studies to solve the aforementioned objects, and completed the invention by finding that, in the precipitation step of the method of producing HPMCAS, a reaction solution containing HPMCAS can be extruded into water from extruding ports of an extruder to form a precipitate, and the obtained precipitate can be then minced to thereby reduce the production of fine powder and provide HPMCAS powder having favorable flowability.

The present invention provides a method of producing the hydroxypropyl methylcellulose acetate succinate powder as defined below.
[1] A method of producing hydroxypropyl methylcellulose acetate succinate powder comprising the steps of:
   esterifying hydroxypropyl methylcellulose with an acetylating agent and a succinoylating agent in the presence of an aliphatic carboxylic acid to prepare a reaction solution containing hydroxypropyl methylcellulose acetate succinate;
   extruding the reaction solution into water from one or more extruding ports of an extruder to form a precipitate, and then mincing the resultant precipitate to obtain a suspension containing hydroxypropyl methylcellulose acetate succinate particles,
   washing the hydroxypropyl methylcellulose acetate succinate particles in the suspension and recovering the washed hydroxypropyl methylcellulose acetate succinate particles; and
   drying the washed hydroxypropyl methylcellulose acetate succinate particles.
[2] The method according to [1], wherein each extruding port has an opening area of 0.120 to 1.150 mm² when the reaction solution is extruded into water in the step of extruding the reaction solution.
[3] The method according to [1] or [2], wherein the reaction solution has a temperature of 15 to 40°C immediately before being extruded into water in the step of extruding the reaction solution.
[4] The method according to any one of [1] to [3], wherein an average particle diameter of the hydroxypropyl methylcellulose acetate succinate particles in the suspension as determined by a wet sieving test as set forth in JIS Z8815 is 500 to 1300 µm, and wherein a mass percentage of the particles having a diameter of 350 µm or less in the total mass of the particles is 3.0% or less.

The present invention can reduce production of fine powder in the precipitation step, which thereby enhances the filtering property in the washing step and prevents deterioration in washing efficiency.

Further, the present invention allows the production of HPMCAS powder which is excellent in flowability. Accordingly, the HPMCAS powder produced by the method of the present invention is useful in, for example, the application in solid dispersion for improving the elusion property of a poorly water-soluble drug, or in the application for enteric coating of a tablet.

### BRIEF DESCRIPTION OF THE DRAWINGS

FIG. 1 is a schematic view illustrating an example of an extruder for use in the method of producing hydroxypropyl methylcellulose acetate succinate powder according to the present invention.
FIG. 2A is a cutaway end view illustrating an example of extruder for use in the method of producing hydroxypropyl methylcellulose acetate succinate powder according to the present invention
FIG. 2B is a front view illustrating an example of an extruding port plate of the extruder as shown in FIG. 2A
FIG. 2C is a front view illustrating an example of the rotating blades of the extruder as shown in FIG. 2A.

### DETAILED DESCRIPTION OF THE INVENTION

### [Method of producing hydroxypropyl methylcellulose acetate succinate powder]

The method of producing hydroxypropyl methylcellulose acetate succinate powder according to the present invention essentially includes an esterification reaction step, a precipitation step, a washing/recovering step and a drying step.

### <Esterification reaction step>

In the esterification reaction step, an esterification reaction of hydroxypropyl methylcellulose with an acetylating agent and a succinoylating agent is carried out in the presence of an aliphatic carboxylic acid to obtain a reaction solution containing hydroxypropyl methylcellulose acetate succinate.

Hydroxypropyl methylcellulose (also referred to as "HPMC" hereunder) is a non-ionic water-soluble cellulose ether. HPMC synthesized by a known method or the one that is commercially available may be used. HPMC may for example be prepared in such a manner where a solution of an alkali metal hydroxide such as sodium hydroxide and potassium hydroxide is at first brought into contact with, for example, a sheet-, chip- or powder-like pulp so as to obtain an alkali cellulose, followed by adding an etherifying agent such as methyl chloride and propylene oxide to perform an etherifying reaction.

The degree of substitution (DS) of the methoxy groups of HPMC is preferably 1.10 to 2.20, more preferably 1.40 to 2.00, and still more preferably 1.60 to 2.00, in terms of obtaining HPMC having the reduced number of insoluble fibers. The molar substitution (MS) of the hydroxypropoxy groups of HPMC is preferably 0.10 to 1.00, more preferably 0.20 to 0.80, and still more preferably 0.2 to 0.65, in terms of obtaining HPMC having the reduced number of insoluble fibers.

The insoluble fibers refer to water-insoluble parts of the fibers that are contained in HPMC. HPMC exhibits a water solubility after having the hydroxyl groups in cellulose partially etherified, and thereby weakening the hydrogen bonds in the intra-molecule and inter-molecule of cellulose. Since it is industrially difficult to perform etherification in a perfectly uniform manner, HPMC potentially contains parts that are insoluble in water, i.e., the insoluble fibers, due to an insufficient degree of substitution of ether groups, or an ununiform substitution of the ether groups. If HPMCAS contains a large number of insoluble fibers in the final product, the yield of an enteric coating preparation will decrease due to an ununiform enteric film, or productivity will decline as filter clogging will frequently occur in a filtration step of the coating solution; it is therefore preferred that HPMC as a raw material of HPMCAS have a small number of the insoluble fibers. The number of the insoluble fibers may for example be calculated by analyzing the HPMC aqueous solution with the aid of a device such as a Coulter counter.

It is to be noted with respect to HPMC that the DS of the methoxy groups refers to a degree of substitution of the methoxy groups, which is an average number of methoxy groups per number of anhydroglucose unit, and that the MS of the hydroxypropoxy groups of HPMC refers to a molar substitution of the hydroxypropoxy groups, which is an average number of moles of hydroxypropoxy groups per mole of anhydroglucose. The DS of the methoxy groups and the MS of the hydroxypropoxy groups of HPMC may be determined based on the converted values of the values obtained by the respective measurements performed in accordance with the Japanese Pharmacopoeia 18th Edition.

It is preferred in terms of kneadability in the esterification reaction step that the viscosity at 20°C of a 2% by mass aqueous solution of HPMC be 1.0 to 50.0 mPa·s, more preferably 2.0 to 20.0 mPa·s and even more preferably 2.0 to 5.0 mPa·s.

The viscosity at 20°C of a 2% by mass aqueous solution of HPMC may be determined in accordance with the viscosity measurement by capillary tube viscometer under "Viscosity Determination" in "General tests" of the Japanese Pharmacopoeia, 18th Edition.

Examples of the aliphatic carboxylic acid include an aliphatic carboxylic acid having 2 to 4 carbon atoms such as acetic acid, propionic acid and butyric acid, among which acetic acid is preferred in terms of economy.

It is preferred in terms of dissolving HPMC and increasing the reaction rate that the used amount of the aliphatic carboxylic acid be 3.00 to 10.00 mol, more preferably 4.00 to 8.00 mol, per 1 mol of HPMC.

Examples of the acetylating agent include acetic anhydride and acetyl chloride, among which acetic anhydride is preferred in terms of economy.

The amount of acetylating agent to be used is not particularly limited as long as HPMCAS having a desired degree of substitution can be obtained, but in terms of reaction efficiency, it is preferably 0.20 to 1.50 mol, more preferably 0.40 to 1.30 mol, per 1 mol of HPMC.

Examples of the succinoylating agent include succinic anhydride and succinyl chloride, among which succinic anhydride is preferred in terms of economy.

The amount of the succinoylating agent to be used is not particularly limited as long as HPMCAS having a desired degree of substitution can be obtained, but it is preferred in terms of reaction efficiency that the amount be 0.10 to 1.50 mol, more preferably 0.20 to 1.20 mol per 1 mol of HPMC.

The esterification reaction may be carried out in the presence of a catalyst. As the catalyst, an alkali metal carboxylate such as sodium acetate and potassium acetate is preferred in terms of economy. The catalyst may be used singly or in combination of two or more as needed. A commercially available catalyst may be used therefor.

The amount of the catalyst to be used may be suitably selected in consideration of the degree of substitution of HPMCAS, but it is preferred in terms of reaction efficiency that the amount be 0.10 to 2.00 mol, more preferably 0.30 to 1.90 mol, per 1 mol of HPMC.

It is preferred in terms of the reaction rate that the reaction temperature in the esterification reaction step be 60 to 120°C, more preferably 60 to 100°C.

The reaction time in the esterification reaction step is preferably 2 to 8 hours, more preferably 3 to 6 hours, in terms of obtaining HPMCAS having a desired degree of substitution.

It is preferred in terms of reaction efficiency that the esterification reaction be performed using a stirring machine capable of uniformly dispersing and mixing highly viscous reaction ingredients. Examples of the stirring machines to be used for the reaction include, but are not particularly limited to, a kneader mixer having twin-shaft stirring blades and a vertical stirring tank having two or more stirring shafts and blades.

After performing the esterification reaction, water may be optionally added as needed to the reaction solution containing HPMCAS so long as the HPMCAS particles are not precipitated for the purpose of treating unreacted acetylating and succinoylating agents and controlling the viscosity of the reaction solution containing HPMCAS to obtain a post-treated reaction solution of HPMCAS (the mixing treatment with water after performing the reaction is also referred to as "post-treatment").

It is preferred in terms of ensuring feeding capability during extrusion while inhibiting fine powder production caused by the collapse of HPMCAS particles in the precipitation step that the reaction solution containing HPMCAS have an HPMCAS concentration of 20 to 30% by mass. It is also preferred when the HPMCAS is post treated that the reaction solution containing the post-treated HPMCAS have an HPMCAS concentration of 20 to 30% by mass.

The amount of water to be added into the reaction solution in the post treatment in the esterification reaction step is preferably 10 to 450 parts by mass, more preferably 50 to 300 parts by mass, per 100 parts by mass of HPMC, from a viewpoint of enhancing transportability of the HPMCAS reaction solution and preventing precipitation of HPMCAS particles.

### <Precipitation step>

Next, there will be described a precipitation step in which a reaction solution containing the HPMCAS is extruded into water from extruding ports of an extruder to form a precipitate, and the obtained precipitate is then minced to obtain a suspension containing HPMCAS particles.

In the precipitation step, a reaction solution containing the HPMCAS is introduced into an extruder having extruding ports, and then the solution is extruded into water from the extruding ports of the extruder.

The inventors of the present invention conducted a variety of studies, and have found out that if a mixture of water and a reaction solution containing HPMCAS is subjected to shear for forming a precipitate, then HPMCAS particles subjected to an excessive shear becomes finer, leading to an increase in the amount of fine powder.

The inventors of the present invention have further advanced the study, and have found out that a reaction solution containing the HPMCAS may be extruded into water from extruding ports of an extruder for forming a precipitate such that the precipitated HPMCAS particles have a uniform particle diameter, which thereby inhibits an increment in the amount of fine powder via miniaturization of the HPMCAS particles.

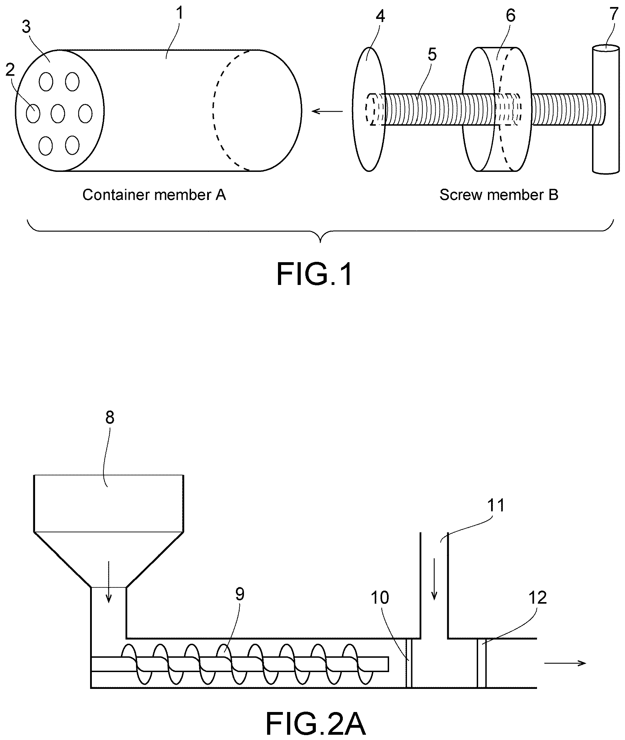

FIGs. 1 and 2A to 2C illustrate examples of extruders having extruding ports.

FIG. 1 illustrates an extruder having two members consisting of a container member A and a screw member B. The container member A includes a cylindrical portion 1 into which a reaction solution containing HPMCAS is introduced and an extruding port plate 3 having extruding ports 2. The screw member B includes an extrusion plate 4, a screw member 5, a connecting cap 6 for connecting the screw member B to the cylindrical portion 1, and a handle 7.

The extruder of FIG. 1 may be used so that a reaction solution containing HPMCAS is introduced into the cylindrical portion 1, and the connecting cap 6 is connected to the cylindrical portion 1. The handle 7 of the screw member may be rotated to move the extrusion plate 4 when the extruding port plate 3 is submerged in water. The moving extrusion plate 4 extrudes the reaction solution containing HPMCAS from the extruding ports 2, and then the solution becomes in contact with water to thereby obtain a precipitate of HPMCAS. The obtained precipitate may be minced using a cutter or rotating blades to obtain a suspension that contains HPMCAS.

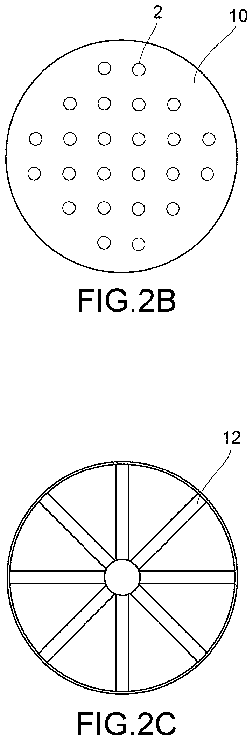

Further, the extruder as illustrated in FIG. 2A includes a hopper 8 for introducing the reaction solution containing HPMCAS, a screw 9 for extruding HPMCAS, an extruding port plate 10 having extruding ports, a water introducing unit 11 and rotating blades 12. FIG. 2B is a front view illustrating an example of the extruding port plate 10 and FIG. 2C is a front view illustrating an example of the rotating blades 12.

The extruder of FIG. 2A may be used so that a reaction solution containing HPMCAS is introduced into the hopper 8, and the reaction solution is fed from the hopper 8 by the screw 9 along the downward direction, as indicated by the arrow, and is extruded through the extruding port plate 10 having the extruding ports 2. The extruded reaction solution becomes in contact with water having been introduced from the water introducing unit 11 along the downward direction as indicated by the arrow to thereby obtain an HPMCAS precipitate. The obtained precipitate may be minced by the rotating blades 12 to obtain a suspension containing HPMCAS.

The extruding port plates as shown in FIGs. 1 and 2A to 2B each includes one or more extruding ports. It is preferred that the extruding ports each have an opening area of 0.120 to 1.150 mm², more preferably 0.135 to 1.050 mm², and most preferably 0.150 to 0.950 mm² from the viewpoint of preventing deterioration in washing ability which is caused by the increment in diameter of the HPMCAS particles and reducing production of fine powder caused by the reduction in size of the particle radius of the HPMCAS particles. Moreover, it is preferable for the extruder, having the extruding ports with the opening areas of the range as defined above, to be operated such that the linear speed of the extrusion from the extruding ports is within the range of 0.1 to 10 mm/s.

The extruding ports may have any shape which is not particularly limited. For example, the shape may be square, rectangle, round, or any other polygonal shape. It is, however, preferred in terms of reducing the production of fine powder when the HPMCAS precipitate is minced that the shape be round. When each extruding port has a round shape, the HPMCAS precipitate, having been obtained by bringing the reaction solution, extruded from the extruding ports, in contact with water, may be minced at the cutting length of, for example, 0.5 to 2 times of the diameter of each extruding port.

The temperature of the reaction solution containing the HPMCAS to be extruded into water in the precipitation step is preferably 5 to 50°C, more preferably 10 to 45°C and most preferably 15 to 40°C in terms of inhibiting adhesion or aggregation of HPMCAS particles in the suspension containing the HPMCAS particles while reducing energy consumption by heat.

As for the viscosity at 25°C of the reaction solution containing the HPMCAS for use in the precipitation step, it is preferred in terms of preventing malfunctioning of the reaction solution extrusion while reducing the production of fine powder that such viscosity be 15 to 250 Pa·s, more preferably 20 to 200 Pa·s, and even more preferably 20 to 150 Pa·s. The viscosity of the reaction solution containing HPMCAS can be measured at the shear rate of 10 sec⁻¹ according to the viscosity measurement method as set forth in JIS Z8803 using a cone-plate rotational viscometer.

It is also preferred in terms of inhibiting adhesion or aggregation of the HPMCAS particles in the suspension, containing the HPMCAS particles, while reducing energy consumption by heat that the temperature of water to be used in the precipitation step be 10 to 50°C, more preferably 15 to 40°C and most preferably 20 to 30°C.

It is preferred in terms of reducing the production of fine powder and preventing deterioration in washing ability that the HPMCAS particles in the suspension, containing the HPMCAS particles, have an average particle diameter of 500 to 1300 µm, more preferably 520 to 1250 µm, and even more preferably 550 to 1200 µm.

The average particle diameter of the HPMCAS particles in the suspension, containing the precipitated HPMCAS particles, may be measured by the wet sieving test as set forth in Japanese Industrial Standard JIS Z 8815. That is, when the cumulative mass fractions (%) on sieves of the respective sieve opening sizes are plotted against the sieve opening sizes (µm), where the horizontal axis represents the sieve opening size (µm) and the vertical axis represents the cumulative mass fraction (%) on sieves, the average particle diameter of HPMCAS particles is determined as the value of sieve opening size at the intersection between the line of the 50% the cumulative mass fraction on sieves and a straight line connecting the two plotted points sandwiching the line of the 50% cumulative mass fraction on sieves. The cumulative mass fractions (%) on sieves may be calculated from the masses of HPMCAS particles that remain on the sieves after poring the suspension, containing the HPMCAS particles, into the sieves and then poring pure water into the HPMCAS particles until the liquid, having passed through the sieves, becomes transparent to thereby transfer the particles into the respective containers for measuring the mass.

It is preferred in terms of preventing occlusion by fine powder in filtering surface during washing while enhancing flowability of the HPMCAS powder to be finally obtained that the percentage by mass of fine powder having a diameter of 350 µm or less in the total mass of the HPMCAS particles in the suspension containing the HPMCAS particles be 3.0% or less, more preferably 2.5% or less, and most preferably 2.2% or less. The lower limit of the mass percentage is not particularly limited, and it may, for example, be more than 0%.

The mass percentage of the particles having a particle diameter of 350 µm or less in the total mass of the HPMCAS particles in the suspension containing the HPMCAS particles may be calculated based on the wet sieving test from the total amount by mass of the HPMCAS particles that remain on the respective sieves having the sieve opening sizes of 350 µm or less with respect to the total amount by mass of the HPMCAS particles that remain on all of the sieves after performing the test.

### <Washing/recovering step>

Next, there will be described a washing/recovering step of washing HPMCAS particles in the suspension, containing the HPMCAS particles, and recovering the washed HPMCAS particles.

In the washing/recovering step, by-products having been produced in the esterification reaction step such as acetic acid and succinic acid will be removed.

The method of washing is not particularly limited. Examples of the method include a method of repeating the pattern of removing a portion of water in the suspension, containing the HPMCAS particles, by performing, for example, centrifugation, filtration, compression or decantation, and then suspending the HPMCAS particles again in a clean solvent.

The type of solvent for use in washing is not particularly limited but it is preferred in terms of economy that water be used as a solvent. It is preferred in terms of inhibiting adhesion/coagulation properties of the HPMCAS particles in the suspension containing the HPMCAS particles while reducing energy consumption by heat that the temperature of the solvent for use in washing be 5 to 50°C, more preferably 10 to 40°C.

After the washing/recovering step, the suspension containing HPMCAS particles may be subjected to liquid removal to make a water-containing HPMCAS cake for reducing the load of drying before moving into the drying step. Water is partially removed from the suspension, containing the HPMCAS particles, by a method of removing liquid, which is not particularly limited, such as centrifugation, pressure filtration, vacuum filtration and compression. It is preferred in terms of reducing the drying load that the water content of the water-containing HPMCAS cake be 90% or less, more preferably 80% or less. The lower limit of the water content is not particularly limited but the content may be, for example, 20% or more.

The water content of the water-containing HPMCAS cake may be measured in accordance with the procedure described in section 2. 41 in General tests of the Japanese Pharmacopoeia 18th Edition. More specifically, the water content of the water-containing HPMCAS cake is defined as {(Mass of water-containing HPMCAS cake - Absolute dry mass of HPMCAS)/(Mass of water-containing HPMCAS cake)} × 100%, where the term "Mass of water-containing HPMCAS cake" refers to the mass of HPMCAS which is precisely quantified in accordance with the procedure described in the section 2.41 in General tests in the Japanese Pharmacopoeia 18th Edition. Further, the term "Absolute dry mass of HPMCAS" refers to the mass of HPMCAS having been dried in accordance with the procedure described in the section of "2.41 Loss on Drying Test" in the Japanese Pharmacopoeia 18th Edition.

### <Drying step>

Next, there will be described a drying step of drying the washed HPMCAS particles. It is preferred in terms of preventing aggregation of the HPMCAS particles that the drying temperature (product temperature) in the drying step be 20 to 100°C, more preferably 25 to 80°C. It is preferred in terms of preventing aggregation of the HPMCAS particles that the drying time in the drying step be 5 hours or less, more preferably 3 hours or less. The lower limit of drying time in the drying step is not particularly limited as long as the water content of the HPMCAS powder can be sufficiently reduced, and the drying time period may, for example, be 10 minutes or more.

The devices to be used for the drying are not particularly limited, and dryers such as a fluid bed dryer, an agitated trough dryer and a vacuum dryer may be used.

### [Hydroxypropyl methylcellulose acetate succinate powder]

It is preferred in terms of obtaining HPMCAS powder having favorable flowability that the water content of the dried HPMCAS powder be more than 0% and less than or equal to 5%, more preferably more than or equal to 0.5% and less than or equal to 3.0%.

Water content of the HPMCAS powder may be determined in accordance with the procedure described in section 2.41 in General tests of the Japanese Pharmacopoeia 18th Edition. More specifically, the water content of the HPMCAS powder is defined as {(Mass of HPMCAS powder - Absolute dry mass of HPMCAS powder)/(Mass of HPMCAS powder)} × 100%, wherein the term "Mass of HPMCAS powder" refers to the mass of HPMCAS powder which is precisely determined in accordance with the procedure described in section 2.41 in General tests of the Japanese Pharmacopoeia 18th Edition. Further, the term "Absolute dry mass of HPMCAS powder" refers to the mass of HPMCAS powder which was dried in accordance with the procedure described in section 2.41 in General tests in the Japanese Pharmacopoeia 18th Edition.

The DS of methoxy groups of HPMCAS is preferably 1.10 to 2.20, more preferably 1.40 to 2.00, and even more preferably 1.60 to 2.00. The MS of hydroxypropoxy groups of HPMCAS is preferably 0.10 to 1.00, more preferably 0.20 to 0.80, and even more preferably 0.20 to 0.65.

The DS of acetyl groups of HPMCAS is preferably 0.10 to 2.50, more preferably 0.10 to 1.00, and even more preferably 0.20 to 0.80.

The DS of succinyl groups of HPMCAS is preferably 0.10 to 2.50, more preferably 0.10 to 1.00, and even more preferably 0.10 to 0.60.

It is preferred in terms of solubility that the ratio of the DS of acetyl groups to the DS of succinyl groups in HPMCAS (acetyl groups/succinyl groups) be 0.5 to 4.00, more preferably 0.80 to 3.70.

The DSs of methoxy groups, acetyl groups and succinyl groups of HPMCAS represent the degrees of substitutions, and refer to the average numbers of the methoxy groups, acetyl groups and succinyl groups, respectively, per number of anhydroglucose unit. The MS of the hydroxypropoxy groups of HPMCAS represents a molar substitution of hydroxypropoxy groups, and refers to the average mole number of hydroxypropoxy groups per 1 mol of anhydroglucose.

The DS of methoxy groups, the DS of acetyl groups and the DS of succinyl groups of HPMCAS, and the MS of hydroxypropoxy groups of HPMCAS may be obtained by the conversion of the values obtained in accordance with the method in the monographs "Hypromellose acetate ester succinate ester" of the Japanese Pharmacopoeia 18th Edition.

It is preferred that the average diameter of HPMCAS powder as determined by the dry sieving test be 350 µm or more and 1300 µm or less, more preferably 400 µm or more and 1250 µm or less, and most preferably 450 µm or more and 1200 µm or less. The average diameter as determined by the dry sieving test may be determined by the dry sieving test as set forth in JIS Z8815. That is, when the cumulative mass fractions on sieves (%) of the respective sieve opening sizes are plotted against the sieve opening sizes (µm), where the horizontal axis represents the sieve opening size (µm) and the vertical axis represents the cumulative mass fraction (%) on sieves, the average particle diameter of HPMCAS powder is determined as the value of sieve opening size at the intersection between the line of the 50% the cumulative mass fraction on sieves and a straight line connecting the two plotted points sandwiching the line of the 50% cumulative mass fraction on sieves.

A loose bulk density of HPMCAS powder is preferably 0.3 g/ml or less, more preferably 0.25 g/ml or less, and even more preferably 0.2 g/ml or less. The lower limit of the loose bulk density is not particularly limited, and it may, for example, be 0.10 g/mL or more. The term "Loose bulk density" refers to a bulk density in a loosely packed state, and is measured by uniformly supplying a sample into a cylindrical container (made of stainless steel) having a diameter of 5.05 cm and a height of 5.05 cm (volume: 100 ml) from above (23 cm above the container) by using a powder characteristics tester, and leveling the supplied sample at the top face of the container for weighing. Specific examples of such powder characteristics tester include a powder characteristics tester of POWDER TESTER PT-S type produced by Hosokawa Micron Corporation.

A tapped bulk density of HPMCAS powder is preferably 0.35 g/ml or less, more preferably 0.3 g/ml or less, and even more preferably 0.25 g/ml or less. The lower limit of the tapped bulk density is not particularly limited, and it may, for example, be 0.10 g/mL or more. The term "tapped bulk density" refers to a bulk density in the state where a sample is closely packed into the cylindrical container by tapping. The term "tapping" refers to an operation in which a cylindrical container filled with a sample is repeatedly dropped from a predetermined height to apply a light impact to the bottom of the container, thereby closely packing the sample in the container. Specifically, as is the case of measuring the "loose bulk density", a sample is supplied into the cylindrical container and the supplied sample is leveled at the top face of the container for weighing, and then the cylindrical container is capped at the top with a cap, after which the cap is filled with the sample up to the upper edge of the cap, and subjected to 180 times of tapping from a tap height of 1.8 cm. After the tapping has been completed, the cap is removed from the container, and then the sample is leveled at the top face of the container for weighing. The bulk density of this state is determined as the tapped bulk density

It is preferred in terms of obtaining favorable flowability that the degree of compression of HPMCAS particles be 6% or less, more preferably 5% or less, even more preferably 4% or less, and most preferably 3% or less. The lower limit of the degree of compression is not particularly limited, and it may be, for example, more than 0%. Herein, the degree of compression refers to the value that is calculated based on the tapped bulk density and the loose bulk density using the following expression: Degree of compression (%) = {(tapped bulk density - loose bulk density)/tapped bulk density} × 100.

A powder having a smaller degree of compression is regarded as more excellent in respect of flowability.

It is preferred in terms of obtaining favorable flowability that the HPMCAS particles have an angle of repose of 35.4° or less, more preferably 32° or less, even more preferably 30° or less, and most preferably 29° or less. The lower limit of the angle of repose is not particularly limited, and it may be, for example, 15° or more. The term "angle of repose" refers to an angle between a horizontal plane and the slope face of a pile that is naturally formed by gently depositing a powder on a horizontal surface, and a powder having a smaller angle of repose is regarded as more excellent in respect of flowability. The angle of repose may be calculated using a powder characteristics tester manufactured by Hosokawa Micron Corporation by feeding a powdery sample down onto a table of metallic disc having a diameter of 80 mm from a height of 75 mm until the powdery sample forms a pile having a constant angled slope with respect to the table, and measuring the angle between the slope face of the pile, formed by the deposited powder, and the table. An example of such powder characteristics tester includes a powder characteristics tester of POWDER TESTER PT-S type produced by Hosokawa Micron Corporation.

### WORKING EXAMPLES

The present invention is described in detail hereunder with reference to working and comparative examples; the present invention shall not be limited in any way to the following working examples.

The methods as described below were used to measure or calculate the average particle diameter of the HPMCAS particles in the suspension containing the precipitated HPMCAS particles after the precipitation step, filtration speed of the HPMCAS particles after washing and ignition residue of the finally obtained HPMCAS particles.

The above-mentioned methods were also used for measuring or calculating other physical properties unless otherwise stated herein.

### ·Average Particle Diameter of HPMCAS particles in Suspension Containing Precipitated HPMCAS particles

The average particle diameter of the HPMCAS particles was determined by the wet sieving test as set forth in JIS Z8815. That is, when the cumulative mass fractions (%) on sieves of the respective sieve opening sizes were plotted against the sieve opening sizes (µm), where the horizontal axis represents the sieve opening size (µm) and the vertical axis represents the cumulative mass fraction (%) on sieves, the average particle diameter of HPMCAS particles was determined as the value of sieve opening size at the intersection between the line of the 50% the cumulative mass fraction on sieves and a straight line connecting the two plotted points sandwiching the line of the 50% cumulative mass fraction on sieves. The cumulative mass fractions (%) on the sieves were calculated from the masses of HPMCAS particles that remained on the sieves after poring the suspension, containing the HPMCAS particles, into the sieves and then poring pure water into the HPMCAS particles until the liquid having passed through the sieves became transparent. Each sieve had a plain weave net and was of a cylindrical shape with a diameter of 200 mm. The sieves had opening sizes of 4000 µm, 2360 µm, 1700 µm, 1400 µm, 1000 µm, 710 µm, 500 µm, 350 µm and 177 µm in the working examples 1 to 3 and the comparative example 1, while in the working example 4 and the comparative example 2, the sieves had opening sizes of 1400 µm, 1000 µm, 710 µm, 500 µm, 350 µm, 177 µm, 106 µm and 75 µm. Further, a manual sieving method was used as a method of the sieving.

### •Filtration Speed

Filtration speed was evaluated using 300 g of slurry having 5% by mass solid content concentration of HPMCAS by measuring the time for the filtrate to pass through a filter by the amount of 150 g. There was used an electron beam perforation (EBP) filter (Opening size: 300 µm; Aperture ratio: 22.7%) with a filtration surface having a filtration area of 9.08 cm². Filtration speed per unit filtration area was calculated using the expression as defined by:
Filtration speed per unit filtration area (g/(s·cm²)) = {Amount of filtrate (150 g)/Time (s) for the filtrate to pass through filter by the amount of 150 g}/Filtration area (9.08 cm²).

### •Ignition Residue

The ignition residue was determined by the test method as set forth in the section of "2.44 The Residue on Ignition Test" specified in General Tests in the Japanese Pharmacopoeia 18th Edition. That is, a small amount of sulfuric acid was added to the HPMCAS powder, which was then heated gently at a temperature as low as practicable until the sample is thoroughly charred. After that, a small amount of sulfuric acid was added again and it was heated gently until white fumes are no longer evolved. Then, the sample was ignited at 600°C until the residue is completely incinerated. The ignition residue was calculated from the mass of the resultant residue using the expression as defined by: Ignition Residue (%) = {Mass (g) of resultant residue/Mass (g) of HPMCAS powder used in the test} × 100

The ignition residue is an impurity originating from the alkali metal elements in the alkali metal carboxylate used as a catalyst in the reaction, and serves as an index of the washability in the washing step.

### Synthesis Example 1

Into a 5L kneader equipped with twin-shaft stirrer were put 800 parts by mass of HPMC whose DS of methoxy groups was 1.87, whose MS of hydroxypropoxy groups was 0.24, and whose 2% by mass aqueous solution at 20°C had a viscosity of 3.4 mPa·s; 1280 parts by mass of acetic acid; 561 parts by mass of acetic anhydride; 87.5 parts by mass of succinic anhydride; and 374 parts by mass of sodium acetate, and stirring was then performed at 85°C for 5 hours to cause an esterification reaction. After stirring them for 5 hours, 1085.9 parts by mass of water was added thereinto to stop the reaction. As a result, 4188.4 parts by mass of a reaction solution (1) containing HPMCAS was obtained.

### Synthesis Example 2

There was obtained 4498.6 parts by mass of a reaction solution (2) containing HPMCAS by carrying out similar operations as the synthesis example 1, except that the amount of water to be added was changed to 1396.1 parts by mass.

### Synthesis Example 3

There was obtained 4808.9 parts by mass of a reaction solution (3) containing HPMCAS by carrying out similar operations as the synthesis example 1, except that the amount of water to be added was changed to 1706.4 parts by mass.

### Working Example 1

A reaction solution (1), containing the HPMCAS, having a temperature of 25.1°C was extruded from the extruding ports of the extruder as illustrated in FIG. 1 into water at 22.8°C to form a precipitate, and the resultant precipitate was minced to obtain a suspension containing HPMCAS particles. The extruder had extruding ports each having a round opening with an opening area of 0.950 mm². The linear speed for extruding the reaction solution (1) into water from the extruding ports was within the range of 0.1 to 10 mm/s, and the precipitate was minced at the length within a range of 0.5 to 2 times the diameter of each extruding port. The average particle diameter of the HPMCAS particles in the suspension was determined by the wet sieving test as 1179 µm.

The suspension was filtrated through a sieve of 200 mesh (opening size of 75 µm) until the filtrate was no longer discharged. The obtained HPMCAS particles were washed by repeating the following process three times; the process comprised re-suspension of HPMCAS particles in water of 20°C, stirring, and then filtration on a 200 mesh sieve (opening size of 75µm) until the filtrate was no longer discharged. As a result, washed HPMCAS particles were obtained.

The washed HPMCAS particles were re-suspended and stirred into pure water having a temperature of 20°C to make a slurry, and the filtering speed of it via filter filtration was evaluated. It turned out that the filtering speed per unit filtration area was 4.29 g/(s·cm²).

The washed HPMCAS particles were dried at 40 to 80°C using a fluid-bed dryer to obtain HPMCAS powder. Table 1 shows the physical properties of the obtained HPMCAS powder.

### Working Example 2

There was obtained HPMCAS powder by carrying out similar operations as the working example 1, except that the reaction solution (2) containing the HPMCAS having a temperature of 26.3°C was extruded into water having a temperature of 27.8°C. Table 1 shows the physical properties of the obtained HPMCAS powder.

### Working Example 3

There was obtained HPMCAS powder by carrying out similar operations as the working example 1, except that the reaction solution (3) containing the HPMCAS having a temperature of 24.2°C was extruded into water having a temperature of 25.6°C. Table 1 shows the physical properties of the obtained HPMCAS powder.

### Working Example 4

There was obtained HPMCAS powder by carrying out similar operations as the working example 1, except that there was used the reaction solution (1) containing the HPMCAS having a temperature of 25.5°C, which was extruded through the extruding ports with round openings each having an opening area of 0.159 mm² into water having a temperature of 22.7°C, and that the sieves used in the wet sieving test had opening sizes of 1400 µm, 1000 µm, 710 µm, 500 µm, 350 µm, 177 µm, 106 µm and 75 µm. Table 1 shows the physical properties of the obtained HPMCAS powder.

### Comparative Example 1

The reaction solution (3) of a temperature of 24.8°C containing the HPMCAS was introduced, together with water having a temperature of 26.8°C, into a mixer (LABOLUTION Pipeline-Homo Mixer manufactured by PRIMIX Corporation) and then subjected to shear to thereby obtain a suspension containing precipitated HPMCAS particles. The mixer had a rotor having a diameter of 27.5 mm and a stator having an inner diameter of 29 mm. The rotational speed of the rotor was 5000 rpm, the peripheral speed of the outermost circumference of the blades in the rotor was 7.2 m/s, and the shear rate was 9599 s⁻¹. The mass of water to be mixed therewith was 300 parts by mass per 100 parts by mass of the reaction solution (3) containing the HPMCAS.

The average particle diameter of the HPMCAS particles in the suspension was determined by the wet sieving test as 1014 µm.

The suspension was filtrated through a sieve of 200 mesh (opening size of 75 µm) until the filtrate was no longer discharged. The obtained HPMCAS particles were washed by repeating the following process three times; the process comprised re-suspension of HPMCAS particles in water of 20°C, stirring, and then filtration on a 200 mesh sieve (opening size of 75µm) until the filtrate was no longer discharged. As a result, washed HPMCAS particles were obtained.

The washed HPMCAS particles were re-suspended and stirred into pure water having a temperature of 20°C to make a slurry, and the filtering speed of it via filter filtration was evaluated. It turned out that the filtering speed per unit filtration area was 4.29 g/(s·cm²).

The washed HPMCAS particles were dried at 40 to 80°C using a fluid-bed dryer to obtain HPMCAS powder. Table 1 shows the physical properties of the obtained HPMCAS powder.

### Comparative Example 2

There was obtained HPMCAS powder by carrying out similar operations as the comparative example 1, except that there were used water at 24.9°C and the reaction solution (1) containing the HPMCAS having a temperature of 24.9°C, that the rotational speed of the rotor of the mixer was changed to 10000 rpm, the peripheral speed of the outermost circumference of the blades in the rotor was changed to 14.4 m/s, the shear rate was changed to 19198 s⁻¹, and the mass of water to be mixed therewith was changed to 300 parts by mass per 100 parts by mass of the reaction solution (1) containing the HPMCAS, and that the sieves used in the wet sieving test had opening sizes of 1400 µm, 1000 µm, 710 µm, 500 µm, 350 µm, 177 µm, 106 µm and 75 µm. Table 1 shows the physical properties of the obtained HPMCAS powder.

**Table 1A**

| Working example/ Comparative example | Esterification reaction step | | Precipitation step | | | | | |
|---|---|---|---|---|---|---|---|---|
| | Additive amount of water per 100 parts by mass of HPMC | HPMCAS concentration in reaction solution* | Viscosity of reaction solution * before precipitation step | Temperature of reaction solution* before precipitation step | Temperature of water used in precipitation step | Precipitation method | Opening area of extruding port | Rotational speed of homogenizer |
| | [Parts by mass] | [wt%] | [Pa·s] | [°C] | [°C] | [-] | [mm²] | [rpm] |
| Working Example 1 | 135.7 | 23.63 | 134 | 25.1 | 22.8 | Extrusion | 0.950 | - |
| Working Example 2 | 174.5 | 22.00 | 87.5 | 26.3 | 27.8 | Extrusion | 0.950 | - |
| Working Example 3 | 213.3 | 20.58 | 25.5 | 24.2 | 25.6 | Extrusion | 0.950 | - |
| Working Example 4 | 135.7 | 23.63 | 134 | 25.5 | 22.7 | Extrusion | 0.159 | - |
| Comparative Example 1 | 213.3 | 20.58 | 25.5 | 24.8 | 26.8 | Homogenizer | - | 5000 |
| Comparative Example 2 | 135.7 | 23.63 | 134 | 24.9 | 24.9 | Homogenizer | - | 10000 |

| | | | | | | | | |
|---|---|---|---|---|---|---|---|---|
| *The term "reaction solution" indicated in Table 1A refers to a reaction solution after performing post treatment. | | | | | | | | |

**Table 1B**

| Working example/ Comparative example | Properties of precipitate | | Washing/ Recovering step | Properties of HPMCAS particles | | | | | |
|---|---|---|---|---|---|---|---|---|---|
| | Average diameter determined by wet sieving method | Mass percentage of particles having particle diameter of 350 µm or less determined by wet sieving method | Filtration speed | Average particle diameter | Loose bulk density | Tapped bulk density | Degree of compression | Angle of repose | Ignition residue |
| | [µm] | [%] | [g/(s▪cm²)] | [µm] | [g/mL] | [g/mL] | [%] | [°] | [%] |
| Working Example 1 | 1179 | 1.2 | 4.29 | 1186 | 0.160 | 0.164 | 2.25 | 29.6 | 0.01 |
| Working Example 2 | 1173 | 0.7 | 4.17 | 1177 | 0.162 | 0.165 | 2.00 | 32.0 | 0.01 |
| Working Example 3 | 1183 | 2.2 | 2.85 | 1033 | 0.170 | 0.177 | 3.90 | 35.3 | 0.01 |
| Working Example 4 | 598 | 2.2 | 3.36 | 584 | 0.179 | 0.188 | 4.73 | 28.9 | 0.06 |
| Comparative Example 1 | 1014 | 13.0 | 1.60 | 1098 | 0.184 | 0.198 | 7.26 | 35.5 | 0.01 |
| Comparative Example 2 | 578 | 26.1 | 1.24 | 451 | 0.146 | 0.163 | 10.47 | 40.3 | 0.07 |

The HPMCAS particles of the working examples 1 to 3 had faster filtration speeds of the slurry and were superior in washing speed compared to the HPMCAS particles of the comparative example 1 because the HPMCAS particles of the working examples 1 to 3 had smaller contents of fine powder having a particle diameter of 350 µm or less in the suspension compared to that of the comparative example 1, while the particles had an average particle diameter that is comparable to that of the comparative example 1. Further, the HPMCAS powders after drying of the working examples 1 to 3 exhibited excellent flowabilities because they had lower degrees of compression and smaller angles of repose compared to the HPMCAS after drying the comparative example 1 while the powders had average particle diameters that were comparable to that of the comparative example 1.

Furthermore, the HPMCAS particle of the working example 4 had faster filtration speed of the slurry and was superior in washing speed compared to the HPMCAS particle of the comparative example 2 because the HPMCAS particle of the working example 4 had a smaller content of fine powder having a particle diameter of 350 µm or less in the suspension compared to that of the comparative example 2, while the particle had an average particle diameter that was comparable to that of the comparative example 2.
Moreover, the HPMCAS powder after drying of the working example 4 exhibited excellent flowability because it had lower degrees of compression and smaller angle of repose compared to the HPMCAS powder after drying of the comparative example 2 while the powder had an average particle diameter that was comparable to that of the comparative example 2.

### Reference numerals

- A: Container member
- B: Screw member
- 1: Cylindrical portion
- 2: Extruding ports
- 3: Extruding port plate
- 4: Extrusion plate

- 5: Screw member
- 6: Connecting cap
- 7: Handle
- 8: Hopper
- 9: Screw
- 10: Extruding port plate
- 11: Water introducing unit
- 12: Rotating blades

## Claims

1. A method of producing hydroxypropyl methylcellulose acetate succinate powder comprising the steps of:
esterifying hydroxypropyl methylcellulose with an acetylating agent and a succinoylating agent in the presence of an aliphatic carboxylic acid to prepare a reaction solution containing hydroxypropyl methylcellulose acetate succinate;
extruding the reaction solution into water from one or more extruding ports of an extruder to form a precipitate, and then mincing the resultant precipitate to obtain a suspension containing hydroxypropyl methylcellulose acetate succinate particles,
washing the hydroxypropyl methylcellulose acetate succinate particles in the suspension and recovering the washed hydroxypropyl methylcellulose acetate succinate particles; and
drying the washed hydroxypropyl methylcellulose acetate succinate particles.

2. The method according to claim 1, wherein each extruding port has an opening area of 0.120 to 1.150 mm² when the reaction solution is extruded into water in the step of extruding the reaction solution.

3. The method according to claim 1 or 2, wherein the reaction solution has a temperature of 15 to 40°C immediately before being extruded into water in the step of extruding the reaction solution.

4. The method according to claim 1 or 2, wherein an average particle diameter of the hydroxypropyl methylcellulose acetate succinate particles in the suspension as determined by a wet sieving test as set forth in JIS Z8815 is 500 to 1300 µm, and wherein a mass percentage of the particles having a diameter of 350 µm or less in the total mass of the particles is 3.0% or less.
